# EUROPEAN PATENT SPECIFICATION

(11) **EP 3 570 588 B1**
(45) Date of publication and mention of the grant of the patent: **30.08.2023**
(21) Application number: 18173251.2
(22) Date of filing: 18.05.2018
(51) Int. Cl.: H04W 28/08, H04W 48/18, H04W 76/16

(54) **CORE RESOURCE DISTRIBUTION**
KERNRESSOURCENVERTEILUNG
DISTRIBUTION DE RESSOURCES CENTRALES

(43) Date of publication of application: 20.11.2019
(73) Proprietor: NTT DOCOMO, INC., Chiyoda-ku Tokyo 100-6150 (JP)
(72) Inventor: SAMA, Malla Reddy, 80687 Munich (DE); MUTIKAINEN, Jari, 80687 Munich (DE); MINOKUCHI, Atsushi, Tokyo, 100-6150 (JP)
(74) Representative: Viering, Jentschura & Partner mbB Patent- und Rechtsanwälte

(56) References cited:
- US-A1- 2018 020 417
- US-A1- 2018 049 213
- US-A1- 2018 092 085
- MOTOROLA MOBILITY ET AL: "Solution for SRVCC handover to 3G", 3GPP DRAFT; S2-183834_5G-SRVCC_SOLUTION_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sanya, P.R. China; 20180416 - 20180420 10 April 2018 (2018-04-10), XP051438133, Retrieved from the Internet: URL:http://www.3gpp.org/ftp/tsg%5Fsa/WG2%5 FArch/TSGS2%5F127%5FSanya/Docs/ [retrieved on 2018-04-10]
- NOKIA ET AL: "23.502: OI#13 - 5GS Registration procedure at mobility between EPS and 5GS with existing 5GC non-3GPP PDU session", 3GPP DRAFT; S2-178430_PCR23502 EPS TO 5GS REGISTRATION W EXISTING 5GC NON-3GPP PDU SESSION_V1, 3RD GENERATION PARTNERSHIP PROJECT (3GPP), MOBILE COMPETENCE CENTRE ; 650, ROUTE DES LUCIOLES ; F-06921 S , vol. SA WG2, no. Reno, NV, US; 20171127 - 20171201 21 November 2017 (2017-11-21), XP051379448, Retrieved from the Internet: URL:http://www.3gpp.org/ftp/tsg%5Fsa/WG2%5 FArch/TSGS2%5F124%5FReno/Docs/ [retrieved on 2017-11-21]

## Description

### Technical Field

The invention relates to communications with a radio access network.

### Background

Where multiple network cores are available on a wireless radio access technology network, it may be desirable to distribute core resources by transitioning one or more user devices from a first network core to a second network core. Current methods for performing core resource distribution may be unsuccessful or may have undesirable consequences.

MOTOROLA MOBILITY ET AL: "Solution for S RVCC handover to 3G ", 3GPP DRAFT; S2-183834, hereafter indicated as D1, discloses a way to reconfigure the 5G network to ensure that calls can be handed over to 3G legacy systems through Single Radio Voice Call Continuity (SRVCC). The system disclosed by D1 requires that an augmented network registration request in which the user device (UE) explicitly requests whether the 5G network has the 5G SRVCC compatibility feature. In turn, a device in the 5G network, specifically a modified AMF, performs the check of whether, in the 5G network in which it resides, the 5G SRVCC compatibility features are active. Upon checking the AMF responds to the device with a success registration and the information of whether the 5G SRVCC compatibility features for the specific network are active, in other words whether 5G SRVCC is possible.

US 2018/049213 A1 (GHOLMIEH AZIZ ET AL) 15 February 2018, hereafter indicated as D2, discloses methods that allow a UE to decide which capabilities to expose to different networks. Following D2, first the UE acquires information about the first radio access technology (RAT) network and the second RAT network; second, the UE decides which capabilities to expose to the two networks; third, the UE communicates to the first and second network which capabilities it will expose; fourth, each rat communicates to the UE the communication configurations to operate in the corresponding RAT.

### Summary

Herein is disclosed a network device (900), comprising: a receiver (902) configured to receive a connection request (414, 510, 610) to connect to a source core network from a user device (402);a determiner (904) configured to determine a compatibility of the user device (402)with a target core network which is different from the source core network, and, in the case that the user device (402) is compatible with the target core network, to generate an instruction for the user device (402) to register with the target core network; wherein the instruction comprises a rejection of the connection request and a cause, and wherein the cause includes a direction to register on the target core network; wherein the network device is further configured to transmit a connection rejection message (512, 614) to the user device in response to the received connection request (414,510, 610);wherein the connection rejection message includes the cause; wherein the network device is further configured to register a network priority value, which is updatable to be the network priority value of the target core network higher than that of the source core network, to maintain a connection between the user device and the target core network.

The invention is defined by the appended claims. Aspects that are not covered by the appended claims do not form part of the invention.

### Brief Description of the Drawings

In the drawings, like reference characters generally refer to the same parts throughout the different views. The drawings are not necessarily to scale, emphasis instead generally being placed upon illustrating the principles of the Disclosure. In the following description, various aspects of the Disclosure are described with reference to the following drawings, in which:
FIG. **1** shows a user device connect to a radio access technology comprising a 4G/EPC network and a 5G/5GC network;
FIG. **2** shows a user device connected to a radio access technology, with an active connection to a 4G/EPC network;
FIG. 3 shows a user device connected to a radio access technology, with an active connection to a 5G/NextGen Core network;
FIG. 4 shows a procedure for core resource distribution, according to a first aspect of the disclosure;
FIG. 5 shows a procedure for core resource distribution to a 5G network, according to a second aspect of the disclosure;
FIG. 6 shows a procedure for core resource distribution from a 5G network, according to a third aspect of the disclosure;
FIG. 7 shows a procedure for core resource distribution from a 5G network, according to a fourth aspect of the disclosure;
FIG. 8 shows a configuration of a radio access network and two network cores;

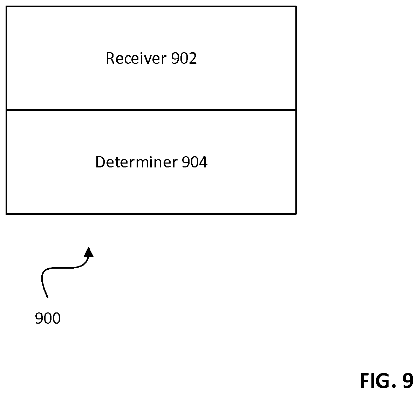

FIG. 9 shows a configuration of a network device;
FIG. 10 shows a method of core resource distribution according to one aspect of the disclosure; and
FIG. 11 shows a method of core resource distribution according to another aspect of the disclosure.

### Description

The following detailed description refers to the accompanying drawings that show, by way of illustration, specific details and aspects in which the Disclosure may be practiced.

The word "exemplary" is used herein to mean "serving as an example, instance, or illustration." Any embodiment or design described herein as "exemplary" is not necessarily to be construed as preferred or advantageous over other embodiments or designs.

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more. The terms "proper subset", "reduced subset", and "lesser subset" refer to a subset of a set that is not equal to the set, i.e. a subset of a set that contains less elements than the set.

A "circuit" as user herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit ("CPU"), Graphics Processing Unit ("GPU"), Digital Signal Processor ("DSP"), Field Programmable Gate Array ("FPGA"), integrated circuit, Application Specific Integrated Circuit ("ASIC"), etc., or any combination thereof. Any other kind of implementation of the respective functions, which will be described below in further detail, may also be understood as a "circuit." It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

The term "base station" used in reference to an access point of a mobile communication network may be understood as a macro base station, micro base station, Node B, evolved NodeB ("eNb"), Home eNodeB, Remote Radio Head ("RRH"), relay point, etc., and may include base stations implemented with conventional base station architectures (e.g. distributed, "all-in-one", etc.) and base stations implemented with centralized base stations architectures (e.g. Cloud Radio Access Network ("Cloud-RAN") or Virtual RAN ("vRAN")). As used herein, a "cell" in the context of telecommunications may be understood as a sector served by a base station. Accordingly, a cell may be a set of geographically co-located antennas that correspond to a particular sectorization of a base station. A base station may thus serve one or more cells (or sectors), where each cell is characterized by a distinct communication channel. Furthermore, the term "cell" may be utilized to refer to any of a macrocell, microcell, femtocell, picocell, etc.

For purposes of this disclosure, radio communication technologies may be classified as one of a Short-Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access ("WiMax") (e.g. according to an IEEE 802.16 radio communication standard, e.g. WiMax fixed or WiMax mobile) and other similar radio communication technologies. Cellular Wide Area radio communication technologies include GSM, UMTS, LTE, LTE-Advanced ("LTE-A"), New Radio (NR), CDMA, WCDMA, LTE-A, General Packet Radio Service ("GPRS"), Enhanced Data Rates for GSM Evolution ("EDGE"), High Speed Packet Access ("HSPA"), HSPA Plus ("HSPA+"), and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples.

The term "network" as utilized herein, e.g. in reference to a communication network such as a mobile communication network, encompasses both an access section of a network (e.g. a radio access network ("RAN") section) and a core section of a network (e.g. a core network section). The term "radio idle mode" or "radio idle state" used herein in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the term "transmit" encompasses both direct (point-to-point) and indirect transmission (via one or more intermediary points). Similarly, the term "receive" encompasses both direct and indirect reception. The term "communicate" encompasses one or both of transmitting and receiving, i.e. unidirectional or bidirectional communication in one or both of the incoming and outgoing directions.

As radio access technologies are developed, multiple radio access technologies may be simultaneously available to a user device. When a new radio access technology is developed, and a prior radio access technology has not yet reached a state of obsolescence, a user device may be configured to operate with both radio access technologies. Moreover, a radio access network may find it desirable to offer its consumers access to multiple radio access technologies. As such, it is common for multiple radio access technologies to be available to a user device connected to a single radio access network.

As 5G networks become more widely available, it is anticipated that consumers' user devices may be configured to operate on an 4G network, a 5G network, or both. Where a user devices capable of operating on both 4G and 5G, a user device connected to a radio access network may be linked to either an 4G core or a 5G core.

Networks providing multiple core networks, such as, for example, 4G and 5G, may require periodic load-balancing or may keep specific user devices (e.g. smartphone device) connected to 5G while moving other devices (e.g. IoT device) to 4G, to better distribute user demands across the available resources. That is, where both a 4G core and a 5G core are available, a disproportionate number of user devices may be connected to one core compared to the other. Similarly, a disproportionate number of resources from one core may be required by the connected devices. Where this occurs, it may be desirable to better distribute the user devices or demands upon the core through load-balancing.

One known method of load-balancing within a 4G core require a Tracking Area Update ("TAU"). An RRC connection release command is transmitted to the user device, with said command including a release cause of "loadBalancingTAURequired". This notifies the user device to perform a TAU following the RRC release. The RAN then selects a new Mobility Management Entity ("MME") following the TAU. Under certain known methods, the MME initiates the RRC connection release with the cause "load-balancing TAU required." The eNodeB initiates and RRC connection release with the cause "core resource distribution TAU required." The RRC release triggers a TAU in the user device, without an MME code in the RRC. The eNodeB then selects a new MME after receiving the TAU. Thus, although the "load-balancing TAU required" command can cause a new MME to be selected, it cannot necessarily be used to change the system. That is, a different system may not necessarily be selected as a result of the TAU procedure unless additional steps are taken.

A second known method for load-balancing between 4G and 5G involves disabling the N1 mode. Using this method, a command according to 3^{rd} Generation Partnership Project ("3GPP") Technical Specification 24.501, Clause 4.9 is transmitted by the user device, said command requiring the disablement of N1 mode radio capability. The user device operating in a single-registration mode disables the N1 mode radio capability and sets the N1 mode bit to "N1 mode not supported" in the user device network capability information element (described in greater detail in 3GPP Technical Specification 24.301) of the attached request message and the tracking area update request message in the Evolved Packet Core. The user device's non-access stratum layer indicates to the access stratum layer or layers the disablement of the N1 mode. The N1 mode corresponds to the user device's ability to operate within 5G, and therefore disabling the N1 mode prevents further 5G operation. Disabling the N1 mode is therefore effective in shifting the load from a 4G network to a 5G network. However, using this method, the N1 node is not enabled until the user device restarts or until Public Land Mobile Network ("PLMN") selection, which may be undesirable. Of note, disabling the N1 mode reduces the ease with which the user device may later be redistributed from 4G to 5G.

Where both a 4G core and a 5G core are available to user devices connected to a given RAN, it may be desired to create improved procedures for load distribution. The following figures describe load distribution procedures according to various aspects of the disclosure.

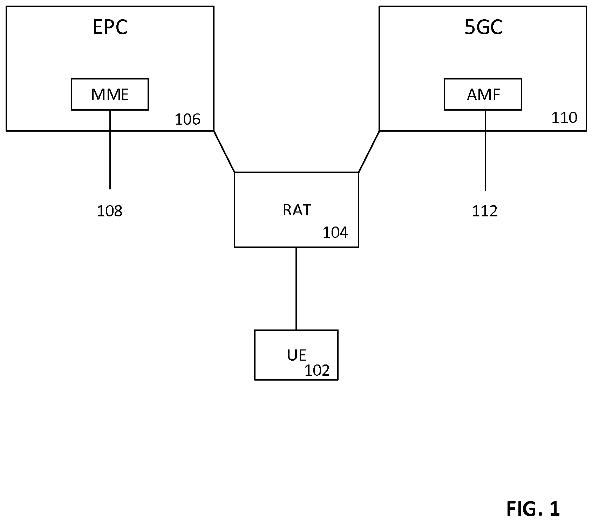

FIG. 1 shows a user device connected to a radio access technology comprising a 4G/EPC network and a 5GC network. In this case, the user device 102 is connected to a Radio Access Network operating a given RAT 104. The RAT 104 may be any RAT, without limitation, including but not limited to an LTE RAT or to an NR RAT. The RAT may have access to a first network 106 and a second network 110. The first network may be a 4G network, said network connection being established through a core such as an Evolved Packet Core 106. The second network may be a 5GC network, said network connection being established through a 5G core 110. The first network may further comprise a Mobility Management Entity ("MME") 108, which may, *inter alia*, perform various paging and signaling control functions within the network. The second network may further comprise an access and mobility management function ("AMF") unit 112, which may include various mobility management capabilities, such as UE-based authentication, authorization, mobility management, etc. The terms "first network" and "second network" are provided herein for clarity and ease of reference but are by no means limited to this order; that is, the RAT 104 may be configured to connect with a first network and a second network, whereby the first network is a 5G network and the second network is a 4G network.

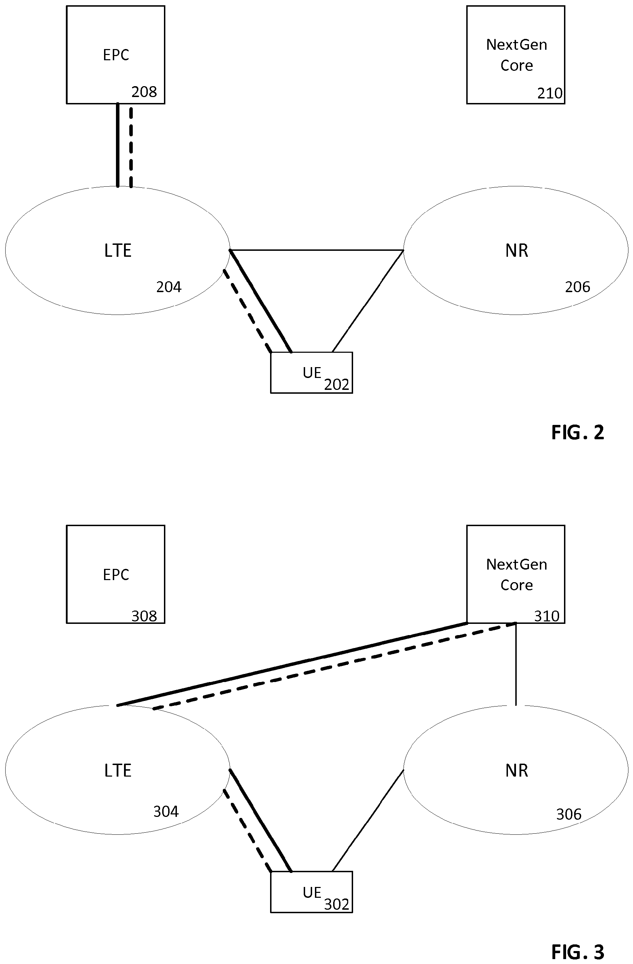

FIG. 2 shows a user device connected to a radio access technology, with an active connection to a 4G/EPC network. The user device 202 is connected to a RAT (which is in this case an LTE RAT 204), which itself has the possibility of establishing a connection with a 4G network (shown as EPC) 208 or a 5G network (shown as NextGenCore) 210. In this case, the user device 202 is connected to the 4G/EPC network 208 through the LTE RAT 204, as indicated by the dashed line. As demonstrated by this image, the user device 202 is connected to and serviced by the 4G network 208, along with any other user devices currently connected to or serviced by the 4G network 208. In the event that the 4G network 208 becomes overloaded, or otherwise desired for load-balancing purposes, the user device 202 can be switched from the 4G network 208 to the 5G network 210. This may be performed while maintaining a direct connection to the LTE network 204.

FIG. 3 shows a user device connected to a radio access technology, with an active connection to a 5G/NextGen Core network 310. In this case, the user device 302 is connected to the LTE RAT 304, which is connected to the 5G/NextGen core 310, as demonstrated by the dashed lines. According to this configuration, the user device 302 is connected to the LTE network 304, which provides services to and from the 5G network 310. The 5G network 310 services the user device 302, along with any other devices that are currently connected to the 5G network 310. For instance, for core resource distribution purposes, it may be necessary to offload one or more user devices from the 5G network 310 to the 4G network 308.

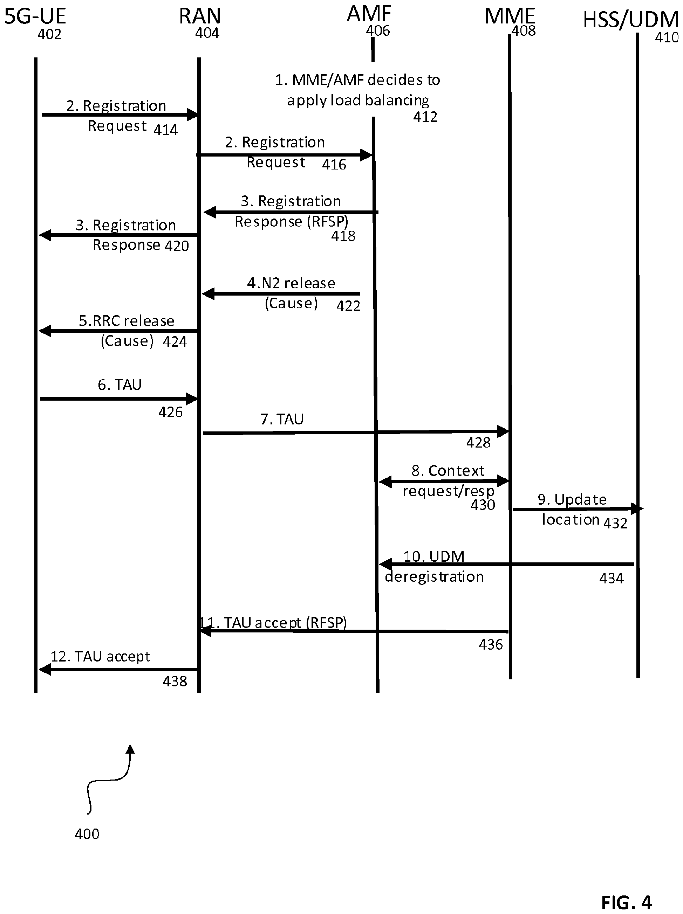

FIG. 4 shows a procedure for core resource distribution, according to a first aspect of the disclosure. As shown in this image, and in accordance with the procedure for load-balancing, communication is performed among a variety of communication elements including a 5G-enabled user device 402, a radio access network ("RAN") 404, an access and mobility function ("AMF") element 406, a mobility management entity ("MME") 408, and a Home Subscriber Server ("HSS") / Unified Data Management ("UDM") element 410. According to one aspect of the disclosure, the MME 408 and/or AMF 406 decides to apply load-balancing 412. The AMF 406 waits for the next mobility registration. The UE then sends a registration request 414. The AMF accepts the registration request 418, the response also carrying the RAT/Frequency Selection Priority ("RFSP") index to the RAN 420. After, the AMF releases the N2 connection with a cause (e.g. cause = "inter-system load-balancing required.") 422. Said cause may be a new cause which may not be currently found within an applicable published standard; or it may be possible to re-use any identified existing cause for this purpose. The RAN releases the RRC connection with cause "inter-system load-balancing required." 424. Said cause may also be a new cause which may not currently be found within an applicable published standard or can be possible to re-use any identified existing cause for this purpose. The RRC layer in the user device notifies the non-access spectrum layer regarding the cause. The non-access spectrum layer initiates a tracking area update in the target system (such as the EPS) with a mapped Globally Unique Temporary Identification ("GUTI"). The non-access spectrum layer indicates to the RRC layer not to include the mapped Globally Unique MME Identifier in the RRC connection request. 426. The RAN selects a new MME and sends the tracking area update to the MME 428. The MME retrieves the context from the old AMF (based on the mapped GUTI). 430. Said context may include the RAT/Frequency Selection Priority index. The MME updates the location to the Home Subscriber Service/Unified Data Management 432. The Home Subscriber Service/Unified Data Management cancels the registration in the AMF 434. The MME accepts the tracking area update 436, said response also carrying the RAT/Frequency Selection Priority index to the RAN. The RAN sets the idle mode camping priorities and handover restrictions accordingly such that the user device stays within the EPC, and the RAN does not initiate an inter-system handover back to 5G. Using this method, the RAT/Frequency Selection Priority index is set to ensure that the user device stays in the correct RAT while in the idle mode, and that the RAN does not perform a handover back to the old system. The AMF/MME retrieves the RAT/Frequency Selection Priority index from the UDM/HSS.

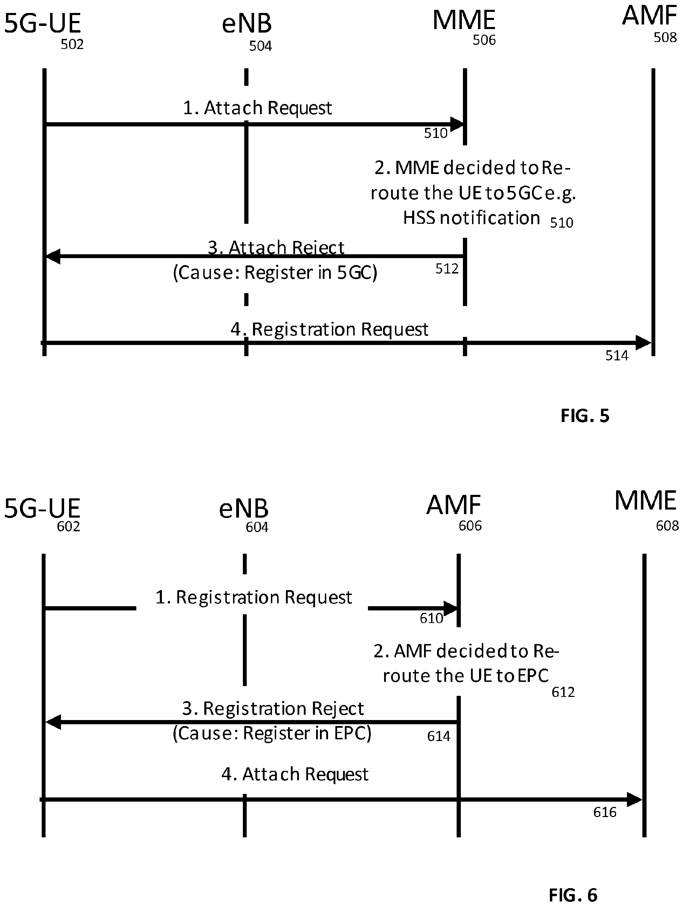

FIG. 5 shows a procedure for core resource distribution to a 5G network, according to a second aspect of the disclosure. This procedure includes communication between a 5G enabled user device 502, an eNB 504, the MME 506, and an AMF 508. According to this procedure, the 5G enabled user device 502 sends an attachment request 510 to the MME 506. The MME decides to reroute the user device to a 5G network pursuant to load-balancing 510. The MME sends an attachment rejection 512 to the 5G enabled user device 502, with the cause for the rejection being a command to register in the 5G network. The 5G enabled user device 502 then sends a registration request 514 to the AMF 508.

According to the second aspect of the disclosure, as described herein, if it is decided to offload the user device to the 5G core, then the MME rejects the user device's attachment request. Along with the rejection, the causes included, which indicates that the user device must perform a registration with the 5G core. After such indication, the user device performs the registration procedure with the 5G core along with a 5G parameter. This procedure may require definition of a new cause code which is currently not contained within the published standards.

FIG. 6 shows a procedure for core resource distribution from a 5G network, according to a third aspect of the disclosure. This procedure involves communication between a 5G enabled user device 602, and eNB 604, the AMF 606, and an MMR 608. According to this procedure, the 5G enabled user device 602 sends a registration request 610 to the AMF 606. The AMF decides to reroute the user device to the EPC 612. The AMF 606 sends a registration rejection 614 to the 5G enabled user device 602, with the rejection because being the need to register in the EPC. The 5G enabled user device 602 then sends an attachment request 616 to the MME 608.

According to the third aspect of the disclosure, as described herein, if it is decided to offload the user device to the EPC (4G) than the AMF rejects the user device's registration request. Along with the rejection is included to cause, which indicates that the user device must perform and attach procedure in the EPC. After such indication, the user device performs the attached procedure with the EPC along with a 4G parameter. This procedure may require definition of a new cause code which is currently not contained within the published standards.

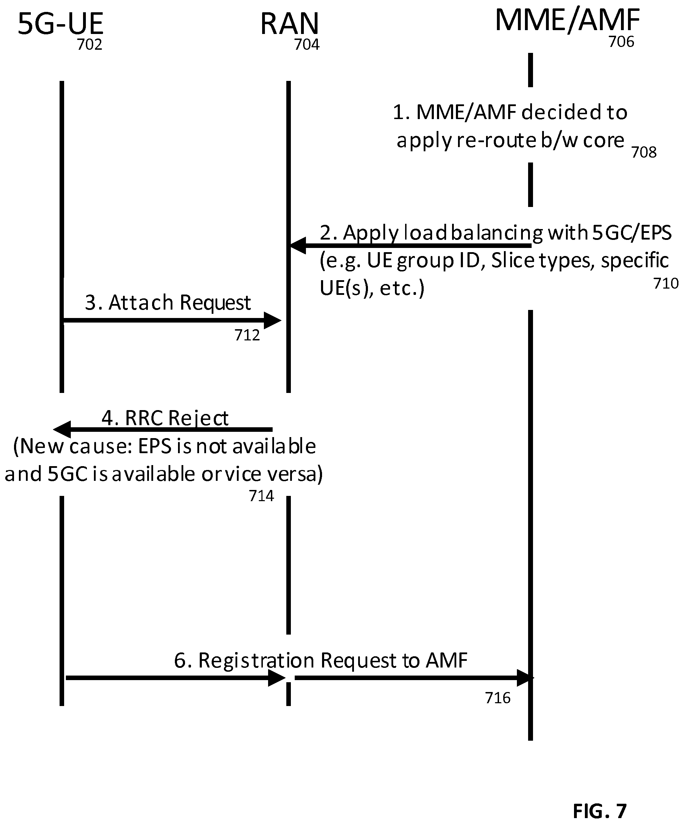

FIG. 7 shows a load-balancing procedure according to a fourth aspect of the disclosure. According to this figure, communication occurs between a 5G enabled user device 702, a RAN 704, and an MME/AMF 706. In this case, the MME/AMF 706 decides to apply load-balancing to an opposite core 708. That is, the 5G core redistributes a user device to the 4G core, or the 4G core redistributes a user device to the 5G core. The MME/AMF 706 applies load-balancing with the 5G/EPS based on one or more categories such as, but not limited to user device group ID, connection slice or sliced types, a dedicated core network ID, one or more specific user devices, or otherwise 710. A 5G enabled user device sends an attachment request 712 to the RAN 704, and the RAN 704 response within RRC rejection 714 stating that the EPS is not available and 5G is available, or vice versa. The 5G enabled user device 702 then sends a registration request to the alternative network, in this case the MME/AMF 716.

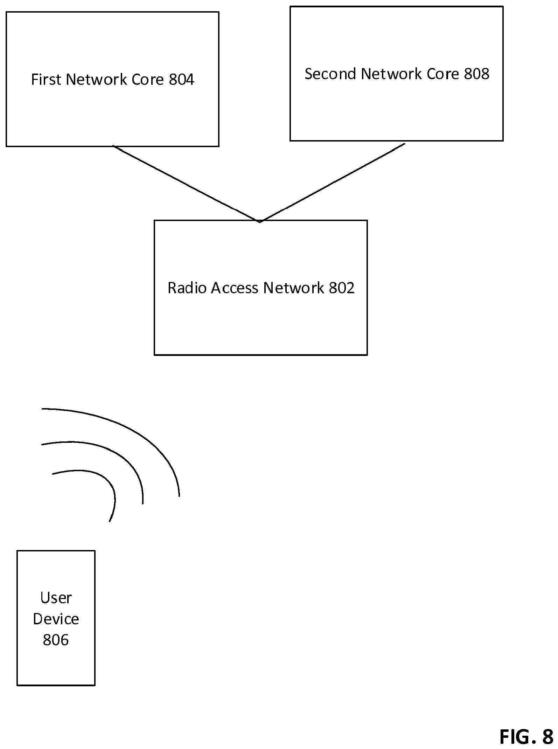

FIG 8. shows a wireless network system according to one aspect of the disclosure, said system comprising a radio access network 802, configured to receive from a user device a connection request to connect to a first network core 804; the first network core 804, configured to receive from the radio access network the connection request from the user device 806; to determine a compatibility of the user device with a second network core 808; and in the case the user device is compatible with the second network core 808, to generate an instruction for the user device 806 to connect to the second network core 808; the second network core 808, configured to obtain from the first network core 804 a network priority value corresponding to the user device 806, update the network priority value to maintain a connection between the user device 806 and the second network core 808, and transmit the updated network priority value to the radio access network 802.

FIG: 9 shows a network device 900 according to one aspect of the disclosure, said network device comprising a receiver 902 configured to receive a connection request from a user device; a determiner 904 configured to determine a compatibility of the user device with a target core network, and, in the case that the user device is compatible with the target core network, to generate an instruction for the user device to connect to the target core network.

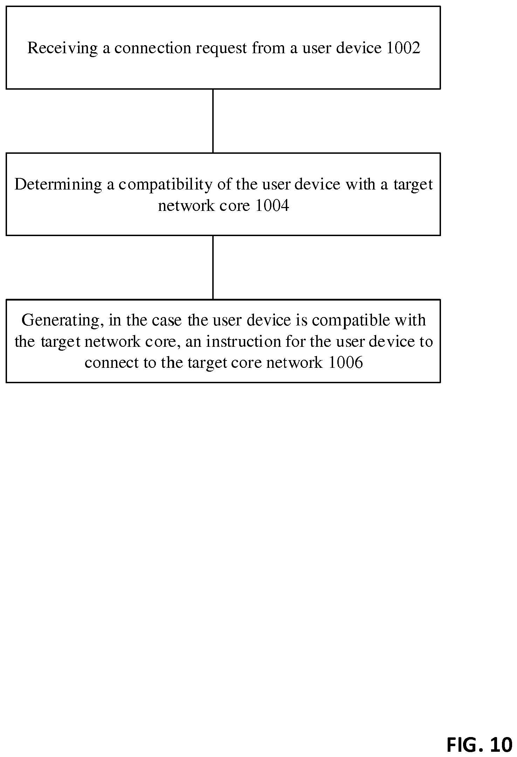

In FIG. 10 is disclosed a method of core resource distribution comprising receiving a connection request from a user device 1002; determining a compatibility of the user device with a target core network 1004, and generating, in the case that the user device is compatible with the target core network, an instruction for the user device to connect to the target core network 1006.

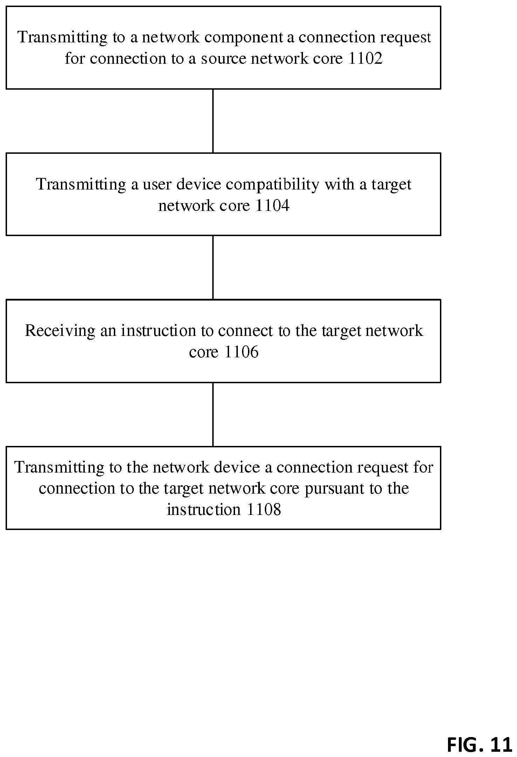

In FIG. 11 is disclosed a method of core resource distribution comprising transmitting to a network device a connection request for connection to a source network core; transmitting a user device compatibility with a target network core 1102; receiving an instruction to connect to the target network core 1104; and transmitting to the network device a connection request for connection to the target network core pursuant to the instruction 1106.

According to the third aspect of the disclosure as described herein, load-balancing may be performed proactively. As such, any time that the MME or AMF desire load-balancing, the MME or AMF will notify the RAN to apply a load-balancing with either the EPS (4G) or the 5G core. When the user device requests a service to a core network, such as, for example, to the EPC, the RAN notifies the user device that the requested core network (in this case the EPC) is not available, but that another core network (such as, in this example, 5G) is available for service. This may include in RRC rejection with a new cause value. After receiving this, the user device performs a registration request with the other network (in this case, the 5G network). This may include a Globally Unique Temporary Identification ("GUTI") translation is the GUTI is already assigned to the user device.

In contrast to the procedures described according to the first, second, and third aspects of the disclosure, this procedure may be performed on a specific user device, or alternatively, on all user devices belonging to a specific group. Such groups may include, but are not limited to devices on a specific Dedicated Core Network, in a network slice, or any other user device grouping. For EPC transfers, this may require a new parameter within the S1 configuration or a new message type in S1-AP. In 5G, this may utilize the existing AMF redirection procedure (such as for AMF load rebalancing) with a new parameter.

As a general matter, it is assumed that a given core knows when a connected user device supports a second core. More concretely, an MME will generally know that a user device also supports a 5G core, and an AMF (for 5G) notes that the user device supports the EPC (for 4G). For example, the user device may notify the MME in the attached request that it supports the N1 mode (5G), and the user device may notify the AMF in the registration request that it supports the S-1 mode (4G). This procedure may be triggered, such as via Operation & Maintenance and Unified Data Management/Home Subscriber Service procedures. If the user devices in idle mode, the network may be able to wait until the user device becomes connected before it sends an instruction to the user device.

According to one aspect of the disclosure, the first network core may be either of a 4^{th} Generation Wireless System ("4G") core or 5^{th} Generation Wireless System ("5G") core, and the second network core may be the other of either the 4G or the 5G. It is expected that during periods of transition between predominant radio access technologies, more than one network core may be available for a user device. Moreover user devices may be commonly configured to operate according to a plurality of network core specifications. For example, where 4G is well-established in the market, and 5G is emerging within the market, there is a strong likelihood that a transitional phase will occur, during which both 4G and 5G networks will be available. Such networks may be accessible to a user device through a single RAN, which may facilitate connections to either the 4G or the 5G network.

Under such circumstances, a user device may be assigned to either a 4G network or a 5G network based, for example, on compatibility with a given network, or a preference for a specific network. These factors may not take into account network capacity, and therefore it may become necessary or desirable to implement one or more resource distribution mechanisms, such that user device demands may be more appropriately distributed between available network cores.

The load distribution methods and principles described herein may be directed for clarity purposes to a 4G and 5G network; however, the principles and methods described herein may be applied to other network settings and are not specifically limited to 4G and 5G networks. It is anticipated that the principles and methods described herein may apply to successive networks to the 5G network and/or to legacy networks that predate the 4G network.

In the event that a load distribution procedure is successful, and thereby a user device is caused to discontinue a connection or connection attempts with a first network core, and establish a connection with a second network core, it may be desirable for one or more steps to be taken to promote a continued connection with the second network core. That is, it may be desirable to avoid an instruction from one or more of the network cores or the RAN for the user device to revert to the first network core. Continued connection to the second network core may be fostered by modification of a network priority value. It is anticipated that a network priority value may be transmitted during communication between a user device and at least one of the RAN or a network core. Said network priority value may comprise one or more network identifiers and a priority for the one or more network identifiers. For example, in the case of a 4G network and 5G network, and identifier for the 4G network may be listed along with an identifier of the 5G network, and such identifiers may be listed in such a way as to impart priority or preference for connection. According to one aspect of the disclosure, the network priority value may be a RAT/Frequency Selection Index. In the event that a load-balancing operation causes a user device to transition from a first network core to a second network core, and in the event that both network cores are present within the network priority value, the network priority value may be modified to either eliminate the first network core or to de-prioritize the first network core, such that the second network core maintains a higher priority. In so doing, the likelihood of reverting to the first network core is reduced.

According to one aspect of the disclosure, the RAN may assist in load-balancing by selecting a second network core in response to a tracking area update. This may occur, for example, when a load-balancing procedure results in a transition of the user device from a 5G network core to a 4G network core. Under such circumstances, the AMF (5G) may release an N2 (5G) connection with the 4G network core and/or the RRC connection, and thereby provide a release cause such as, for example, "inter-system core resource distribution required." It is noted that the example provided herein may be a new cause, not currently contained within a published specification, but which may be created and/or utilized to carry out load-balancing. The proposed text for such a command is merely provided as an example, and the text may be modified as desired.

When the N2 connection or the RRC connection is released, and the user device receives a cause such as, for example, "inter-system load-balancing required", the NAS layer of the user device may initiate a tracking area update within the target system with a mapped GUTI. The NAS layer may indicate to the RRC layer not to include the mapped GUMMEI in the RRC connection request. The RAN receives the tracking area update response and selects a new network core. The new network core may be selected based on the absence of the GUMMEI in the RRC connection request and/or knowledge by the RAN of the load distribution procedure.

According to another aspect of the disclosure, a user device may be redirected to a second network core in response to a connection request to a first network core. For example, a user device attempting to connect to a 4G core may send an attachment request, which will be rejected within instruction to perform a registration with the 5G core. Similarly, a user device attempting to connect to a 5G core may send a registration request, which may be rejected within instruction to perform an attach procedure in the 4G core. These rejections may be accompanied by a cause, said cause advising the user device of a load-balancing procedure. Where no cause is defined within the published specifications, or where it is otherwise desired, a new cause code may be defined.

According to another aspect of the disclosure, the load-balancing may be performed reactively or prospectively. Reactive performance may be understood to mean load-balancing that is carried out in response to a connection request/attach request. That is, once a decision to perform load-balancing has been made, a user device may be redirected to a second network core in response to a an effort from the user device to connect or attach to a first network core. Prospect of load-balancing may be understood to mean load-balancing without necessarily waiting for a connection request/attach request. That is, it may be determined that one or more user devices should be moved from a first network core to a second network core. Said one or more user devices may be identified by a unique user device identifier or by the user device's membership within a group. Said groups may include but are not limited to, user device group identification, dynamic circuit network, network slice, or a specific user device. That is, where a group is identified as a group for load-balancing, the user devices that are members of said group may be ascertained, and each user device may then be instructed to register with the second network core according to one of the aspects of the disclosure.

It is expressly noted that the load-balancing procedures described herein may be performed while maintaining N1 mode capability. As described *supra*, a known method of triggering a load-balancing switch from a 5G network to a 4G network is to disable N1 mode compatibility within a user device. Because N1 mode compatibility is necessary for a 5G connection, a disabled N1 mode compatibility may result in the user device being unable to communicate on a 5G network. Where this occurs, the user device will be compelled to connect to a different network core, such as a 4G core. Because of the disadvantages related thereto, it may be desirable to perform load-balancing while maintaining the N1 compatibility. It is anticipated that the methods and procedures described herein may be performed while in one compatibility is maintained.

The user device may be prompted to transmit one or more updated parameters to the network device. This may be due to an express request by the network device, a rejections of a connection request, or a release of a connection.

The one or more updated parameters may comprise any one or combination of an EPS update type, NAS key set identifier, a prior GUTI, a GPRS ciphering key sequence number, a prior P-TMSI signature, an additional GUTI, a UE network capability, a last visited registered TAI, a DRX parameter, an EPS bearer context status, a MS network capability, a prior location area identification, one or more supported codecs, one or more device properties, or any combination thereof. According to one aspect of the disclosure, the one or more updated parameters may be performed via a tracking area update.

Although the devices and methods herein have been occasionally described in terms of a 4G core and a 5G core, the relationship to 4G and 5G has been presented for illustration purposes only. It is included that the devices and methods described herein may be applied to other radio access technologies, within limitation.

These core resource distribution methods and procedures may be performed by a computer readable medium, that is configured to cause one or more processors to perform any of the actions described herein.

## Claims

1. A network device (900), comprising:
a receiver (902) configured to receive a connection request (414, 510, 610) to connect to a source core network from a user device (402);
a determiner (904) configured to determine a compatibility of the user device (402) with a target core network which is different from the source core network, and, in the case that the user device (402) is compatible with the target core network, to generate an instruction for the user device (402) to register with the target core network;
wherein the instruction comprises a rejection of the connection request and a cause, and wherein the cause includes a direction to register on the target core network;
wherein the network device is further configured to transmit a connection rejection message (512, 614) to the user device in response to the received connection request (414, 510, 610);
wherein the connection rejection message includes the cause;
wherein the network device is further configured to register a network priority value, which is updatable to be the network priority value of the target core network higher than that of the source core network, to maintain a connection between the user device and the target core network.

2. The network device (900) of claim 1, wherein the network device (900) is further configured to generate an instruction for the user device (402) to transmit one or more updated parameters, and wherein the one or more update parameters include at least one of a user device (402) network compatibility, a result of a search for base stations with a predetermined area, or a result of tracking area update.

3. The network device (900) of claim 2, further comprising a radio access network, which is configured to receive the one or more updated parameters from the user device (402) and to select the target core network based on the one or more updated parameters.

4. The network device (900) of any one of claims 1 to 3, wherein the receiver is further configured to receive the one or more updated parameters.

5. The network device (900) of any one of claims 1 to 4, wherein the network device (900) is configured as an AMF or an MME.

6. The network device (900) of claim 1, wherein the network device (900) is configured to connect a user device (402) to a core network.

7. The network device (900) of any one of claims 1 to 6, wherein the network device (900) is further configured to generate the instruction based on a membership of the user device (402) in a core resource distribution device category, and wherein the core resource distribution device category comprises at least one of user device (402) group identification, dynamic circuit network, network slice, or a specific user device (402).

8. A user device (402) comprising:
one or more processors configured to:
transmit (414, 510, 610) to a network device (900) a connection request for connection to a source core network;
transmit a user device (402) compatibility with a target core network;
receive (424), in response to the connection request, an instruction to connect to the target core network which is different from the source core network;
wherein the instruction comprises a rejection of the connection request and a cause;
wherein the cause includes a direction to register on the target network core; and
transmit (426, 514, 616) to the network device (900) a connection request for connection to the target core network pursuant to the instruction;
wherein the user device (402) is further configured to receive a network priority value, which is updatable to be the network priority value of the target core network higher than that of the source core network, to maintain a connection between the user device and the target core network.

9. A method of core resource distribution comprising:
receiving a connection request to connect (414, 510, 610) to a source core network from a user device (402);
determining a compatibility of the user device (402) with a target core network which is different from the source core network, and
generating, in the case that the user device (402) is compatible with the target core network, an instruction for the user device (402) to connect to the target core network;
wherein the instruction comprises a rejection of the connection request and a cause, and wherein the cause includes a direction to register on the target core network;
transmitting a connection rejection message (512, 614) to the user device in response to the received connection request (414, 510, 610);
wherein the connection rejection message includes the cause;
registering a network priority value, which is updatable to be the network priority value of the target core network higher than that of the source core network, to maintain a connection between the user device and the target core network.

10. A method of core resource distribution comprising:
transmitting (414, 510, 610) to a network device (900) a connection request for connection to a source core network;
transmitting the user device (402) compatibility with a target core network which is different from the source core network;
receiving (424), in response to the connection request, an instruction to connect to the target core network which is different from the source core network;
wherein the instruction comprises a rejection of the connection request and a cause, and wherein the cause includes a direction to register on the target core network; and
transmitting (426, 514, 616) to the network device (900) a connection request for connection to the target core network pursuant to the instruction;
wherein the network device is further configured to register a network priority value, which is updatable to be the network priority value of the target core network higher than that of the source core network, to maintain a connection between the user device and the target core network.

11. A computer readable medium configured to cause one or more processors to perform the method of claim 9 or 10.

## Patentansprüche

1. Eine Netzwerkvorrichtung (900), aufweisend:
einen Empfänger (902), eingerichtet zum Empfangen einer Verbindungsanforderung (414, 510, 610) zur Verbindung mit einem Quellen-Kernnetz von einer Benutzervorrichtung (402);
eine Bestimmungseinrichtung (904), die eingerichtet ist, um eine Kompatibilität der Benutzervorrichtung (402) mit einem Ziel-Kernnetz zu bestimmen, das sich von dem Quell-Kernnetz unterscheidet, und um in dem Fall, dass die Benutzervorrichtung (402) mit dem Ziel-Kernnetz kompatibel ist, eine Anweisung für die Benutzervorrichtung (402) zu erzeugen, sich bei dem Ziel-Kernnetz zu registrieren;
wobei die Anweisung eine Ablehnung der Verbindungsanforderung und eine Ursache aufweist, und wobei die Ursache eine Richtung zur Registrierung im Ziel-Kernnetz enthält;
wobei die Netzwerkvorrichtung ferner eingerichtet ist, um als Reaktion auf die empfangene Verbindungsanforderung (414, 510, 610) eine Verbindungsablehnungsnachricht (512, 614) an die Benutzervorrichtung zu senden;
wobei die Verbindungsablehnungsnachricht die Ursache enthält;
wobei die Netzwerkvorrichtung ferner eingerichtet ist, um einen Netzprioritätswert zu registrieren, der so aktualisiert werden kann, dass der Netzprioritätswert des Ziel-Kernnetzes höher ist als der des Quellen-Kernnetzes, um eine Verbindung zwischen der Benutzervorrichtung und dem Ziel-Kernnetz aufrechtzuerhalten.

2. Die Netzwerkvorrichtung (900) nach Anspruch 1, wobei die Netzwerkvorrichtung (900) ferner eingerichtet ist, um eine Anweisung für die Benutzervorrichtung (402) zu erzeugen, um einen oder mehrere aktualisierte Parameter zu übertragen, und wobei der eine oder die mehreren Aktualisierungsparameter mindestens eines von einer Netzwerkkompatibilität der Benutzervorrichtung (402), ein Ergebnis einer Suche nach Basisstationen mit einem vorbestimmten Bereich oder ein Ergebnis einer Aktualisierung des Verfolgungsbereichs enthalten.

3. Die Netzwerkvorrichtung (900) nach Anspruch 2, ferner aufweisend ein Funkzugangsnetz, das eingerichtet ist, um den einen oder die mehreren aktualisierten Parameter von der Nutzervorrichtung (402) zu empfangen und das Ziel-Kernnetz basierend auf dem einen oder den mehreren aktualisierten Parametern auszuwählen.

4. Die Netzwerkvorrichtung (900) nach irgendeinem der Ansprüche 1 bis 3, wobei der Empfänger ferner eingerichtet ist, um den einen oder die mehreren aktualisierten Parameter zu empfangen.

5. Die Netzwerkvorrichtung (900) nach irgendeinem der Ansprüche 1 bis 4, wobei die Netzwerkvorrichtung (900) als AMF oder MME eingerichtet ist.

6. Die Netzwerkvorrichtung (900) nach Anspruch 1, wobei die Netzwerkvorrichtung (900) eingerichtet ist, um eine Benutzervorrichtung (402) mit einem Kernnetz zu verbinden.

7. Die Netzwerkvorrichtung (900) nach irgendeinem der Ansprüche 1 bis 6, wobei die Netzwerkvorrichtung (900) ferner so eingerichtet ist, dass sie die Anweisung basierend auf einer Zugehörigkeit der Benutzervorrichtung (402) zu einer Kernressourcenverteilungsvorrichtungskategorie erzeugt, und wobei die Kernressourcenverteilungsvorrichtungskategorie mindestens eines aufweist von Gruppenidentifikation der Benutzervorrichtung (402), dynamisches Schaltungsnetzwerk, Netzwerkpartition oder eine spezifische Benutzervorrichtung (402).

8. Eine Benutzervorrichtung (402), aufweisend:
einen oder mehrere Prozessoren, eingerichtet zum:
Übertragen (414, 510, 610) einer Verbindungsanforderung für die Verbindung mit einem Quellen-Kernnetz an eine Netzwerkvorrichtung (900);
Übertragen der Kompatibilität einer Benutzervorrichtung (402) mit einem Ziel-Kernnetz;
Empfangen (424), als Reaktion auf die Verbindungsanforderung, einer Anweisung zur Verbindung mit dem Ziel-Kernnetz, das sich vom Quell-Kernnetz unterscheidet;
wobei die Anweisung eine Ablehnung der Verbindungsanfrage und eine Ursache aufweist;
wobei die Ursache eine Richtung zur Registrierung im Zielnetzkern enthält; und
Übertragen (426, 514, 616) einer Verbindungsanforderung an die Vorrichtung (900) zur Verbindung mit dem Ziel-Kernnetz gemäß der Anweisung;
wobei die Benutzervorrichtung (402) des Weiteren eingerichtet ist, um einen Netzprioritätswert zu empfangen, der aktualisiert werden kann, damit der Netzprioritätswert des Ziel-Kernnetzes höher ist als der des Quellen-Kernnetzes, um eine Verbindung zwischen der Vorrichtung und dem Ziel-Kernnetz aufrechtzuerhalten.

9. Ein Verfahren zur Verteilung von Kernressourcen, aufweisend:
Empfangen einer Verbindungsanforderung zur Verbindung (414, 510, 610) mit einem Quellen-Kernnetz von einer Benutzervorrichtung (402);
Bestimmen einer Kompatibilität der Benutzervorrichtung (402) mit einem Ziel-Kernnetz, das sich von dem Quellen-Kernnetz unterscheidet, und
in dem Fall, dass die Benutzervorrichtung (402) mit dem Ziel-Kernnetz kompatibel ist, Erzeugen einer Anweisung für die Benutzervorrichtung (402) zur Verbindung mit dem Ziel-Kernnetz;
wobei die Anweisung eine Ablehnung der Verbindungsanforderung und eine Ursache aufweist, und wobei die Ursache eine Richtung zur Registrierung im Ziel-Kernnetz enthält;
Senden einer Verbindungsablehnungsnachricht (512, 614) an die Benutzervorrichtung als Reaktion auf die empfangene Verbindungsanforderung (414, 510, 610);
wobei die Verbindungsablehnungsnachricht die Ursache enthält;
Registrieren eines Netzprioritätswertes, der so aktualisiert werden kann, dass der Netzprioritätswert des Ziel-Kernnetzes höher ist als der des Quell-Kernnetzes, um eine Verbindung zwischen der Benutzervorrichtung und dem Ziel-Kernnetz aufrechtzuerhalten.

10. Ein Verfahren zur Verteilung von Kernressourcen, aufweisend:
Übertragen (414, 510, 610) einer Verbindungsanforderung an eine Netzwerkvorrichtung (900) zur Verbindung mit einem Quellen-Kernnetz;
Übertragen der Kompatibilität der Vorrichtung des Nutzers (402) mit einem Ziel-Kernnetz, das sich vom Quellen-Kernnetz unterscheidet;
Empfangen (424) einer Anweisung zur Verbindung mit dem Ziel-Kernnetz, das sich vom Quell-Kernnetz unterscheidet, als Reaktion auf die Verbindungsanforderung;
wobei die Anweisung eine Ablehnung der Verbindungsanforderung und eine Ursache aufweist, und wobei die Ursache eine Richtung zur Registrierung im Ziel-Kernnetz enthält; und
Übertragen (426, 514, 616) einer Verbindungsanforderung an die Netzwerkvorrichtung (900) für die Verbindung mit dem Ziel-Kernnetz gemäß der Anweisung;
wobei die Netzwerkvorrichtung ferner eingerichtet ist, um einen Netzprioritätswert zu registrieren, der so aktualisiert werden kann, dass der Netzprioritätswert des Ziel-Kernnetzes höher ist als der des Quellen-Kernnetzes, um eine Verbindung zwischen der Benutzervorrichtung und dem Ziel-Kernnetz aufrechtzuerhalten.

11. Ein computerlesbares Medium, eingerichtet zum Veranlassen eines oder mehrerer Prozessoren zur Durchführung des Verfahrens nach Anspruch 9 oder 10.

## Revendications

1. Dispositif de réseau (900), comprenant :
un récepteur (902) configuré pour recevoir une demande de connexion (414, 510, 610) pour connecter à un réseau central source depuis un dispositif utilisateur (402) ;
un déterminateur (904) configuré pour déterminer une compatibilité du dispositif utilisateur (402) avec un réseau central cible différent du réseau central source et, dans le cas où le dispositif utilisateur (402) est compatible avec le réseau central cible, pour générer une instruction pour le dispositif utilisateur (402) de s'enregistrer auprès du réseau central cible ;
dans lequel l'instruction comprend un rejet de la demande de connexion et une cause, et dans lequel la cause comprend une direction d'enregistrement sur le réseau central cible ;
dans lequel le dispositif de réseau est en outre configuré pour transmettre un message de rejet de connexion (512, 614) au dispositif utilisateur en réponse à la demande de connexion reçue (414, 510, 610) ;
dans lequel le message de rejet de connexion comprend la cause ;
dans lequel le dispositif de réseau est en outre configuré pour enregistrer une valeur de priorité de réseau, qui peut être mise à jour pour que la valeur de priorité de réseau du réseau central cible soit supérieure à celle du réseau central source, afin de maintenir une connexion entre le dispositif utilisateur et le réseau central cible.

2. Dispositif de réseau (900) selon la revendication 1, dans lequel le dispositif de réseau (900) est en outre configuré pour générer une instruction pour que le dispositif utilisateur (402) transmette un ou plusieurs paramètres mis à jour, et dans lequel ledit un ou lesdits plusieurs paramètres de mise à jour comprennent au moins l'un parmi une compatibilité de réseau du dispositif utilisateur (402), un résultat d'une recherche de stations de base avec une zone prédéterminée, ou un résultat d'une mise à jour de la zone de suivi.

3. Dispositif de réseau (900) selon la revendication 2, comprenant en outre un réseau d'accès radio, qui est configuré pour recevoir ledit un ou lesdits plusieurs paramètres mis à jour du dispositif utilisateur (402) et pour sélectionner le réseau central cible sur la base dudit un ou desdits plusieurs paramètres mis à jour.

4. Dispositif de réseau (900) selon l'une quelconque des revendications 1 à 3, dans lequel le récepteur est en outre configuré pour recevoir ledit un ou lesdits plusieurs paramètres mis à jour.

5. Dispositif de réseau (900) selon l'une quelconque des revendications 1 à 4, dans lequel le dispositif de réseau (900) est configuré comme un AMF ou un MME.

6. Dispositif de réseau (900) selon la revendication 1, dans lequel le dispositif de réseau (900) est configuré pour connecter un dispositif utilisateur (402) à un réseau central.

7. Dispositif de réseau (900) selon l'une quelconque des revendications 1 à 6, dans lequel le dispositif de réseau (900) est en outre configuré pour générer l'instruction en fonction d'une appartenance du dispositif utilisateur (402) à une catégorie de dispositif de distribution de ressources de base, et dans lequel la catégorie de dispositif de distribution de ressources de base comprend au moins l'un parmi une identification de groupe de dispositif utilisateur (402), un réseau de circuits dynamiques, une tranche de réseau, ou un dispositif utilisateur spécifique (402).

8. Dispositif utilisateur (402), comprenant :
un ou plusieurs processeurs configurés pour :
transmettre (414, 510, 610) à un dispositif de réseau (900) une demande de connexion pour une connexion à un réseau central source ;
transmettre une compatibilité de dispositif utilisateur (402) avec un réseau central cible ;
recevoir (424), en réponse à la demande de connexion, une instruction de connexion au réseau central cible qui est différent du réseau central source ;
dans lequel l'instruction comprend un rejet de la demande de connexion et une cause ;
dans lequel la cause comprend une direction d'enregistrement sur le cœur de réseau cible ; et
transmettre (426, 514, 616) au dispositif de réseau (900) une demande de connexion pour une connexion au réseau central cible conformément à l'instruction ;
dans lequel le dispositif utilisateur (402) est en outre configuré pour recevoir une valeur de priorité de réseau, qui peut être mise à jour pour que la valeur de priorité de réseau du réseau central cible soit supérieure à celle du réseau central source, afin de maintenir une connexion entre le dispositif utilisateur et le réseau central cible.

9. Procédé de distribution de ressources de base, comprenant :
la réception d'une demande de connexion pour connecter (414, 510, 610) à un réseau central source depuis un dispositif utilisateur (402) ;
la détermination d'une compatibilité du dispositif utilisateur (402) avec un réseau central cible différent du réseau central source, et
la génération, dans le cas où le dispositif utilisateur (402) est compatible avec le réseau central cible, d'une instruction pour que le dispositif utilisateur (402) se connecte au réseau central cible ;
dans lequel l'instruction comprend un rejet de la demande de connexion et une cause, et dans lequel la cause comprend une direction d'enregistrement sur le réseau central cible ;
la transmission d'un message de rejet de connexion (512, 614) au dispositif utilisateur en réponse à la demande de connexion reçue (414, 510, 610) ;
dans lequel le message de rejet de connexion comprend la cause ;
l'enregistrement d'une valeur de priorité de réseau, qui peut être mise à jour pour que la valeur de priorité de réseau du réseau central cible soit supérieure à celle du réseau central source, afin de maintenir une connexion entre le dispositif utilisateur et le réseau central cible.

10. Procédé de distribution de ressources de base, comprenant :
la transmission (414, 510, 610) à un dispositif de réseau (900) d'une demande de connexion pour une connexion à un réseau central source ;
la transmission de la compatibilité du dispositif utilisateur (402) avec un réseau central cible différent du réseau central source ;
la réception (424), en réponse à la demande de connexion, d'une instruction de connexion au réseau central cible qui est différent du réseau central source ;
dans lequel l'instruction comprend un rejet de la demande de connexion et une cause, et dans lequel la cause comprend une direction d'enregistrement sur le réseau central cible ; et
la transmission (426, 514, 616) au dispositif de réseau (900) d'une demande de connexion pour une connexion au réseau central cible conformément à l'instruction ;
dans lequel le dispositif de réseau est en outre configuré pour enregistrer une valeur de priorité de réseau, qui peut être mise à jour pour que la valeur de priorité de réseau du réseau central cible soit supérieure à celle du réseau central source, afin de maintenir une connexion entre le dispositif utilisateur et le réseau central cible.

11. Support lisible par ordinateur configuré pour amener un ou plusieurs processeurs à exécuter le procédé selon la revendication 9 ou 10.
